# EUROPÄISCHE PATENTSCHRIFT

(11) **EP 3 991 084 B1**
(45) Veröffentlichungstag und Bekanntmachung des Hinweises auf die Patenterteilung: **06.08.2025**
(21) Anmeldenummer: 20734915.0
(22) Anmeldetag: 25.06.2020
(51) Int. Cl.: G06K 7/10, G06F 9/445

(54) **VERFAHREN UND ANORDNUNG ZUM AUFSCHREIBEN VON SOFTWARE UND/ODER FIRMWARE AUF EINEN PROGRAMMIERBAREN INTEGRIERTEN SCHALTKREIS**
METHOD AND ASSEMBLY FOR WRITING SOFTWARE AND/OR FIRMWARE ONTO A PROGRAMMABLE INTEGRATED CIRCUIT
PROCÉDÉ ET DISPOSITIF D'ÉCRITURE DE LOGICIEL ET/OU DE MICROLOGICIEL DANS UN CIRCUIT INTÉGRÉ PROGRAMMABLE

(30) Priorität: 26.06.2019 DE 102019117235; 05.02.2020 DE 102020102918; 30.04.2020 DE 102020111854
(43) Veröffentlichungstag der Anmeldung: 04.05.2022
(73) Patentinhaber: Gera-Ident GmbH, 07549 Gera (DE); Fraunhofer-Gesellschaft zur Förderung der angewandten Forschung e.V., 80686 München (DE)
(72) Erfinder: WEDER, Andreas, 01159 Dresden (DE); HEINIG, Andreas, 01139 Dresden (DE); STEINBACH, Peter, 07549 Gera (DE); GÖHLER, Sören, 06712 Zeitz (DE); HASSAN, Ramin, 07545 Gera (DE)
(74) Vertreter: Meissner Bolte Partnerschaft mbB
(86) Internationale Anmeldenummer: PCT/EP2020/067840
(87) Internationale Veröffentlichungsnummer: WO 2020/260467

(56) Entgegenhaltungen:
- US-A1- 2005 058 483
- US-A1- 2007 120 670
- US-A1- 2008 041 930
- US-A1- 2008 303 639
- US-A1- 2009 159 191
- US-A1- 2013 144 991
- YANG WENYU ET AL: "Wireless firmware execution control in computational RFID systems", 2015 IEEE INTERNATIONAL CONFERENCE ON RFID (RFID), IEEE, 15 April 2015 (2015-04-15), pages 129 - 136, XP032781655, DOI: 10.1109/RFID.2015.7113083
- YUANQING ZHENG ET AL: "P-MTI", IEEE /ACM TRANSACTIONS ON NETWORKING, IEEE / ACM, NEW YORK, NY, US, vol. 23, no. 4, 1 August 2015 (2015-08-01), pages 1356 - 1366, XP058072804, ISSN: 1063-6692, DOI: 10.1109/TNET.2014.2326460
- MICHAEL BUETTNER (UW) ET AL: "DEWDROP: AN ENERGY- AWARE RUNTIME FOR COMPUTATIONAL RFID", 25 February 2019 (2019-02-25), pages 1 - 29, XP061029216, Retrieved from the Internet <URL:https://www.usenix.org/events/nsdi11/tech/slides/buettner.pdf> [retrieved on 20190225]

## Beschreibung

Die Erfindung betrifft ein Verfahren zum Aufschreiben von Software und/oder Firmware auf einen programmierbaren integrierten Schaltkreis nach Anspruch 1, und eine Anordnung für ein drahtloses Aufschreiben von Software und/oder Firmware auf mindestens einen programmierbaren integrierten Schaltkreis nach Anspruch 11.

Ein derartiges Aufschreiben von Software und/oder Firmware auf einen programmierbaren integrierten Schaltkreis wird auch als ein so genanntes "Flashen" bezeichnet. Der bis dahin noch unspezifische oder neu zu beschreibende programmierbare integrierte Schaltkreis wird durch den Vorgang des Flashens, also des Aufschreibens der Software und/oder der Firmware für seine spätere Verwendung eingerichtet und dementsprechend programmiert. Bei einem derartigen programmierbaren integrierten Schaltkreis handelt es sich beispielsweise um einen so genannten MCU-Chip oder ein FPGA-Element. Die nachfolgend erläuterte Erfindung ist jedoch nicht auf MCU-Chips oder FPGA-Chips beschränkt, sondern grundsätzlich für alle Arten programmierbarer integrierter Schaltkreise anwendbar.

Unter einem MCU-Chip werden nachfolgend integrierte Schaltkreise für Microcontroller-Einheiten (microcontroller units, MCU) verstanden. Derartige MCU werden im Stand der Technik als ein Ein-Chip-Computersystem oder als "System on a Chip" (SoC) bezeichnet. Derartige Einheiten enthalten zum Ausführen der jeweils vorgesehenen Datenverarbeitungen während der Herstellung implementierte Software, so genannte Firmware. Derartige Firmware wird im Rahmen der Fertigung der MCU auf die integrierte Schaltung des MCU aufgespielt bzw. aufgeschrieben.

Ein FPGA (field programmable gate array) ist ein integrierter Schaltkreis der Digitaltechnik, in welchen eine logische Schaltung mittels einer Programmierung geladen werden kann.

Bei einem FPGA-Element versteht man unter einer derartigen Programmierung die Definition einer erforderlichen Schaltungsstruktur. Diese wird mittels einer Hardwarebeschreibungssprache formuliert. Eine Erzeugersoftware setzt diese in eine Konfigurationsdatei um. Diese gibt vor, wie die physischen Elemente im FPGA verschaltet werden sollen. Man spricht daher bei der Programmierung eines FPGA auch davon, dass der FPGA hierdurch eine Konfiguration erhält.

Das Aufschreiben von Software und Firmware in die Halbleiterstrukturen derartiger Schaltkreise wird als "Flashen" bezeichnet. Bei dem herkömmlichen Stand der Technik erfolgt das Flashen in der Weise, dass der MCU-Chip oder das FPGA-Element auf einer Platine fest verdrahtet wird. Die Platine wird in einem nachfolgenden Schritt mit einer externen Flashing-Einrichtung, beispielsweise einem externen Computersystem, in Kontakt gebracht. Die vorgesehene Firmware wird dann über die Platine in den MCU-Chip oder den FPGA-Baustein eingespielt und dort erstmalig eingeschrieben.

Die US 2008/041930 A1 offenbart eine Gerätekonfiguration mittels einer RFID-Technologie. Gegenstand der Druckschrift ist ein Computersystem, bestehend aus einem RFID-Tag und einschlägigen Computerkomponenten, insbesondere einer CPU oder einem Speicher. Der in der Druckschrift offenbarte RFID-Tag enthält eine Tag-Logic, einen nichtflüchtigen Speicher und eine Schnittstelle. Der RFID-Tag weist eine Antenne auf und empfängt darüber drahtlos Daten, die Schnittstelle ist mit den Computerkomponenten verbunden.

Die US 2013/144991 A1 offenbart eine drahtlose Konfiguration für ein Datenverarbeitungsgerät (computing device), insbesondere eine PCI-Erweiterungskarte für den Computerzugriff auf Netzwerke. Das Computing device umfasst einen Drahtlosempfänger, ein Management Modul zur Gerätekonfiguration und einen Computerspeicher. Der Drahtlosempfänger kann insbesondere ein RFID-Empfänger sein. Der Computerspeicher ist gemäß der Druckschrift zum Speichern von Programm-Anweisungen und Konfigurations- und Metadaten vorgesehen.

Die US 2009/0159191 A1 offenbart ein System mit einem darin enthaltenen RFID-Prpgrammierer. Die Druckschrift offenbart ein RFID-Applikatorsystem mit einem integrierten RFID-Programmierer zum Programmieren von RFID-Labeln von oder nach dem Befestigen der Labels an den vorgesehenen Gegenständen. Es wird dort ebenfalls ein externes Gerät zum Steuern des Programmierers bereitgestellt.

Die US 2008/0303639 A1 offenbart ein System und ein Verfahren mit einer partiellen Vor-Programmierung von RFID-Daten. Die Druckschrift lehrt ein System und ein Verfahren, bei dem RFID-Labels mit Programmdaten über eine drahtlose RFID-Verbindung beschrieben werden können.

In der Publikation Yang Wenyu et. al. "Wireless firmware execution control...", 2015 IEEE Int. Conf. on RFID", IEEE, 15. April 2015, Seiten 129 - 136) ist ein Programmierverfahren über RFID offenbart, bei dem auf eine so genannten FirmSwitch-Konfiguration zurückgegriffen wird. Bei FirmSwitch handelt es sich um eine Funktionalität zum Umschalten zwischen bereits vorhandenen Firmware-Blöcken. Bei einer FirmSwitch-Funktionalität sind vorab mehrere intendierte Firmware-Bestandteile innerhalb des MCU eingespeichert, wobei der FirmSwitch-Vorgang lediglich ein Umschalten zwischen den ansonsten bereits vorhandenen Firmware-Blöcken bewirkt.

In den Publikationen Yuanquing Zheng et al., "P-MIT", IEEE/ACM Transactions on Networking, Bd. 24, Nr. 4, 1. August 2015, Seiten 1356-1366 sowie Buettner et al. "Dewdrop: An Energy Aware Runtime...", USENIX, The Adv. Comp. Syst. Ass., 25. Februar 2019, Seiten 1 bis 29 werden programmierbare integrierte Schaltkreise und Firmware-Optimierungen im Allgemeinen beschrieben.

Die aus dem Stand der Technik bekannten Vorgehensweisen sind gerätetechnisch vergleichsweise aufwändig und mit einer Vielzahl von Arbeitsschritten verbunden.

Es besteht somit die Aufgabe, ein Verfahren anzugeben, mit dem das Aufschreiben von Software, insbesondere von Firmware, in einen MCU-Chip oder einen FPGA-Baustein mit einem minimierten Aufwand an Zeit und gerätetechnischem Aufwand erfolgen kann.

Insbesondere soll hierdurch gesichert sein, dass das gesamte Handling in all seinen Einzelschritten beschleunigt wird.

Die Aufgabe wird mit einem Verfahren für ein Aufschreiben von Software und/oder Firmware auf mindestens einen programmierbaren integrierten Schaltkreis mit den Merkmalen des Anspruchs 1 und einer Anordnung für ein drahtloses Aufschreiben von Software und/oder Firmware auf mindestens einen programmierbaren integrierten Schaltkreis mit den Merkmalen des Anspruchs 11 gelöst. Die Unteransprüche enthalten zweckmäßige und/oder vorteilhafte Ausführungsformen des Verfahrens und/oder der Anordnung.

Das Verfahren zum Aufschreiben von Software und/oder Firmware auf mindestens einen programmierbaren integrierten Schaltkreis, zeichnet sich erfindungsgemäß dadurch aus, dass das Aufschreiben der Software und/oder Firmware als ein Flashen eines programmierbaren MCU und/oder eines FPGA drahtlos und kontaktlos mittels einer RFID-Datenübertragung erfolgt.

Weiterhin ist erfindungsgemäß mindestens ein programmierbarer integrierter Schaltkreis, eine drahtgebundene Nahbereichsschnittstelle zum Aufschreiben von Software und/oder Firmware auf den programmierbaren integrierten Schaltkreis, ein RFID-Frontend und eine Antenneneinrichtung als Gesamtanordnung auf einem gemeinsamen Träger angeordnet, wobei die drahtgebundene Nahbereichsschnittstelle in Hardwarestrukturen innerhalb des RFID-Frontends und/oder in Hardwarestrukturen des programmierbaren integrierten Schaltkreises implementiert ist.

Es ist außerdem auch ein Bestandteil des erfindungsgemäßen Verfahrens, dass die drahtgebundene Nahbereichsschnittstelle eine Masterfunktionalität aufweist, bei der ein aktives und anforderungsloses Senden von Daten an den programmierbaren integrierten Schaltkreis ausführbar ist, wobei der mindestens eine programmierbare integrierte Schaltkreis über die drahtgebundene Nahbereichs-Schnittstelle mit dem RFID-Frontend gekoppelt wird.

Dabei weist erfindungsgemäß das RFID-Frontend die RFID-Antenneneinrichtung auf, und die aufzuschreibende Software und/oder Firmware wird von einer externen RFID-Einheit drahtlos an die RFID-Antenneneinrichtung gesendet und über das RFID-Frontend und die Nahbereichsschnittstelle auf den programmierbaren integrierten Schaltkreis aufgeschrieben.

Das Verfahren zum Aufschreiben von Software und/oder Firmware auf mindestens einen programmierbaren integrierten Schaltkreis zeichnet sich somit erfindungsgemäß dadurch aus, dass das Aufschreiben der Software und/oder Firmware drahtlos mittels einer RFID-Datenübertragung erfolgt. Der mindestens eine programmierbare integrierte Schaltkreis ist über eine drahtgebundene Nachbereichs-Schnittstelle mit einem RFID-Frontend gekoppelt, wobei das RFID-Frontend eine RFID-Antenneneinrichtung aufweist. Dabei wird die aufzuschreibende Software und/oder Firmware von einer externen RFID-Einheit drahtlos an die RFID-Antenneneinrichtung gesendet und über das RFID-Frontend und die Nahbereichsschnittstelle auf den programmierbaren integrierten Schaltkreis aufgeschrieben.

Es ist Teil des erfindungsgemäßen Verfahrens, dass die drahtgebundene Nahbereichsschnittstelle eine Masterfunktionalität aufweist. Das bedeutet, dass hierdurch ein aktives und anforderungsloses Senden von Daten an den programmierbaren integrierten Schaltkreis ausführbar wird. Dies ist von Vorteil, weil durch das drahtlose Ansprechen sofort ein Durchgriff auf den programmierbaren integrierten Schaltkreis erfolgt.

Die Gesamtanordnung aus dem RFID-Frontend, der Nahbereichsschnittstelle und dem programmierbaren integrierten Schaltkreis wird bei einer zweckmäßigen Ausgestaltung genauso wie ein passiver RFID-Tag betrieben. Dabei wird die aufzuschreibende Software und/oder Firmware mittels eines konventionellen RFID-Schreibbefehls oder eines anderen, speziell dafür vorgesehenen Befehls auf den programmierbaren integrierten Schaltkreis übertragen. Es können somit standardmäßig ausgestattete und vorhandene RFID-Einrichtungen zur Programmierung des Schaltkreises eingesetzt werden.

Vorteilhafterweise erfolgt über das RFID-Frontend mindestens während des Aufschreibvorgangs der Software und/oder der Firmware eine elektrische Stromversorgung für den programmierbaren integrierten Schaltkreis. Eine solche Gesamtanordnung ist elektrisch vollkommen passiv und kommt ohne eigene Spannungsquelle während des Schreibvorgangs aus.

Hierbei wird die Energie für die bereitgestellte elektrische Stromversorgung durch ein Umformen der Feldenergie einer externen RFID-Quelle entnommen. Die von der RFID-Antenneneinrichtung empfangene Feldenergie wird bei einer zweckmäßigen Ausführung über eine schnelle Gleichrichterschaltung mit einer anschließenden Glättung und Filterung sowie einer Spannungsregelung in elektrische Energie für den programmierbaren integrierten Schaltkreis umgesetzt.

Möglich ist jedoch auch, dass der programmierbare integrierte Schaltkreis über eine Batterie- und/oder eine Akkumulatoreinheit mit elektrischem Strom versorgt wird.

Zur Programmierung einer Vielzahl von programmierbaren integrierten Schaltkreisen sind verschiedene Ausgestaltungen des Verfahrens möglich. Bei einer ersten Ausführungsform sind der programmierbare integrierte Schaltkreis, das über die drahtgebundene Nachbereichs-Schnittstelle gekoppelte RFID-Frontend und die in dem RFID-Frontend enthaltene RFID-Antenneneinrichtung jeweils als eine Vielzahl von auf einer Endlosbahn angeordneten RFID-Transpondereinheiten ausgebildet, wobei die Endlosbahn an einer externen RFID-Schreibeinrichtung zum Aufschreiben der Software und/oder Firmware auf den programmierbaren integrierten Schaltkreis vorbeigeführt wird. Es versteht sich, dass eine solche Endlosbahn nach der Programmierung vereinzelt werden kann.

Bei einer weiteren Ausführungsform sind der programmierbare integrierte Schaltkreis, das über die drahtgebundene Nachbereichs-Schnittstelle gekoppelte RFID-Frontend und die in dem RFID-Frontend enthaltene RFID-Antenneneinrichtung jeweils als eine Vielzahl von einzelnen oder auf einem gemeinsamen Träger angeordneten RFID-Transpondereinheiten ausgebildet, wobei die Vielzahl der RFID-Transpondereinheiten als ein Pulk gemeinsam in den Bereich der externen RFID-Schreibeinrichtung gebracht und programmiert wird. Auch in diesem Fall kann der gemeinsame Träger nach der Programmierung vereinzelt werden.

Die mehreren Transponder können als eine nicht vereinzelte Gesamtheit in das Readerfeld hineinbewegt werden. Sie befinden sich gleichzeitig im Readerfeld. Die Daten werden dann zwischen immer nur einem Tag und einem Reader ausgetauscht und also sequentiell übertragen. Der Programmiervorgang selbst ist also damit nicht parallelisiert, wohl aber das darum herum ablaufende Handling, d.h. das Zuführen und Abführen der Gesamtheit.

Bei einer vorteilhaften Ausgestaltung ist ein Pulk-Schreibbefehl vorgesehen, durch den bewirkt wird, dass alle sich im Feld der externen RFID-Schreibeinrichtung befindlichen RFID-Transpondereinheiten des Pulks gleichzeitig beschrieben und programmiert werden. Es wird ein spezieller Schreibbefehl etabliert. Dieser bewirkt, dass alle sich im Feld befindlichen Transponder einen speziellen Schreibbefehl gleichzeitig ausführen und somit gleichzeitig beschrieben werden. Das Verifizieren des erfolgreichen Schreibvorgangs kann dann wieder sequentiell erfolgen.

Die externe RFID-Schreibeinrichtung weist im Falle der parallelisierten Programmierung eine spezielle Geometrie auf, die eine Beaufschlagung mehrerer Transpondereinheiten mit einer hinreichend großen Feldstärke ermöglicht. Eine Parallelisierung über mehrere Reader ist mit der sonst üblichen Geometrie und der sonst üblichen Reichweite hingegen schwierig, sodass hierzu entsprechende bauliche Anpassungen notwendig sind.

Der programmierbare integrierte Schaltkreis kann wie erwähnt ein MCU-Chip oder ein FPGA-Chip sein.

Eine Anordnung für ein drahtloses Aufschreiben von Software und/oder Firmware auf mindestens einen programmierbaren integrierten Schaltkreis in Form eines programmierbaren MCU und/oder eines FPGA, besteht aus mindestens einer als Gesamtanordnung auf einem Träger angeordneten, von einer externen RFID-Einheit ansprechbaren RFID-Schaltung, enthaltend den mindestens einen programmierbaren integrierten Schaltkreis, ein RFID-Frontend mit einer RFID-Antenne und einer das RFID-Frontend mit dem programmierbaren integrierten Schaltkreis koppelnden drahtgebundenen Nahbereichsschnittstelle.

Diese Anordnung zeichnet sich erfindungsgemäß dadurch aus, dass die drahtgebundene Nahbereichsschnittstelle in Hardwarestrukturen innerhalb des RFID-Frontends und/oder in Hardwarestrukturen des programmierbaren integrierten Schaltkreises implementiert ist und die drahtgebundene Nahbereichsschnittstelle eine Masterfunktionalität aufweist, bei der ein aktives und anforderungsloses Senden von Daten an den programmierbaren integrierten Schaltkreis ausführbar ist, wobei der mindestens eine programmierbare integrierte Schaltkreis über die drahtgebundene Nahbereichs-Schnittstelle mit dem RFID-Frontend gekoppelt wird.

Erfindungsgemäß weist das RFID-Frontend die RFID-Antenneneinrichtung auf, und die aufzuschreibende Software und/oder Firmware ist von einer externen RFID-Einheit drahtlos an die RFID-Antenneneinrichtung übertragbar und über das RFID-Frontend und die Nahbereichsschnittstelle auf den programmierbaren integrierten Schaltkreis aufschreibbar.

Bei einer zweckmäßigen Variante sind das RFID-Frontend, die drahtgebundene Nahbereichsschnittstelle und der programmierbare integrierte Schaltkreis in einem gemeinsamen integrierten elektronischen Bauelement vereinigt.

Der erwähnte Träger ist bei einer Ausführungsform als eine Endlosbahn ausgebildet, wobei die Endlosbahn eine Vielzahl von RFID-Schaltungen aufweist und die Endlosbahn an einer externen RFID-Programmiereinrichtung vorbeibewegbar und dabei jede RFID-Schaltung nacheinander ansprechbar ist. Dies bedeutet insbesondere, dass der Träger über bestimmte Mittel und Ausformungen verfügen kann, mit denen ein präzises Bewegen und Positionieren der Endlosbahn bezüglich einer externen RFID-Einrichtung möglich ist.

Der Träger kann auch eine Vielzahl von RFID-Schaltungen aufweisen, wobei die auf dem Träger angeordneten RFID-Schaltungen von einer externen RFID-Einrichtung einzeln adressierbar ansprechbar sind. In einem solchen Fall wird das einzelne Programmieren der programmierbaren integrierten Schaltkreise nicht durch ein Vorbeibewegen und Positionieren der entsprechenden Trägerabschnitt an der RFID-Einrichtung bewirkt, sondern der Träger kann als Ganzes in eine RFID-Einrichtung eingelegt werden, wobei dann jeder einzelne programmierbare integrierte Schaltkreis beispielsweise über einen bestimmten Befehl adressiert wird, aber ansonsten alle Schaltkreise sich jederzeit gemeinsam im RFIDsensiblen Bereich der RFID-Vorrichtung befinden.

Möglich ist es natürlich auch, dass der Träger als ein Einzelnutzen mit nur einer RFID-Schaltung ausgebildet ist. In einem solchen Fall ist die auf dem Träger angeordnete RFID-Schaltung von einem mobilen RFID-Programmiergerät ansprechbar oder von einer externen RFID-Einrichtung adressierbar ansprechbar.

Eine solche Gestaltung eignet sich besonders für ein ambulantes Nachrüsten oder Neuprogrammieren von Schaltkreisen im Rahmen eines Kundendienstes oder auch für ein Programmieren größerer Mengen regellos angeordneter Träger, deren Schaltkreise an sich jeweils voneinander verschieden sind, aber durch diese Gestaltung in einer einzigen RFID-Einrichtung programmiert werden können, wobei ein umständliches Nacheinander-Programmieren der Einzelnutzen aber entfallen kann.

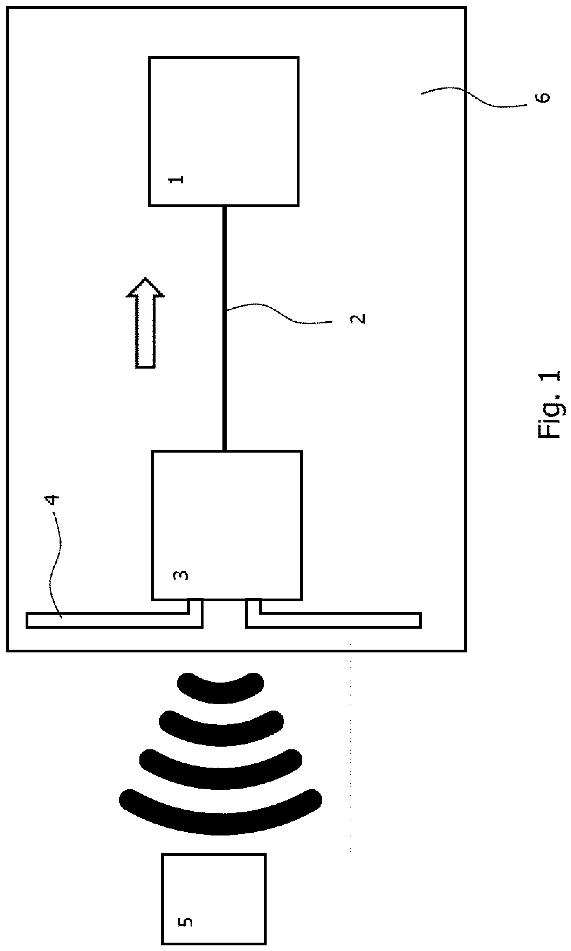

Das erfindungsgemäße Verfahren und die Anordnung zum Ausführen des Verfahrens sollen nachfolgend anhand beispielhafter Ausführungsformen näher erläutert werden. Zur Verdeutlichung dienen die Figuren 1 bis 8. Es werden für gleiche oder gleich wirkende Teile dieselben Bezugszeichen verwendet. Es zeigt
- Fig. 1: einen grundsätzlichen Aufbau einer Anordnung zum Flashen eines programmierbaren integrierten Schaltkreises in einer ersten Ausführungsform,
- Fig. 2: einen grundsätzlichen Aufbau einer Anordnung zum Flashen eines programmierbaren integrierten Schaltkreises in einer zweiten Ausführungsform, wobei das RFID-Frontend mit dem programmierbaren integrierten Schaltkreis in einem einzigen integrierten Schaltkreis vereinigt ist.
- Fig. 3: eine beispielhafte Realisierung einer Anordnung unter Verwendung einer JTAG-Schnittstelle, eines RFID-Frontends und einer MCU bzw. eines FPGA,
- Fig. 4: eine beispielhafte Realisierung einer Anordnung, bei der das RFID-Frontend, ein Programmspeicher und die JTAG-Schnittstelle innerhalb einer MCU bzw. FPGA vereinigt sind,
- Fig. 5: ein Ausführungsbeispiel, bei dem die elektrische Stromversorgung des programmierbaren integrierten Schaltkreises über die RFID-Antenneneinrichtung erfolgt,
- Fig. 6: ein Ausführungsbeispiel, bei dem die elektrische Stromversorgung des programmierbaren integrierten Schaltkreises über eine auf dem gemeinsamen Träger abgeordnete Batterieeinrichtung erfolgt,
- Fig. 7: eine beispielhafte Endlosbahn mit einer Vielzahl von einzelnen RFID-Schaltungen,
- Fig. 8: eine beispielhafte Anordnung eines Pulks aus RFID-Schaltungen mit individueller Adressierbarkeit.

Fig. 1 zeigt einen grundsätzlichen Aufbau einer Anordnung zum Flashen eines programmierbaren integrierten Schaltkreises 1 in einer ersten Ausführungsform. Der programmierbare integrierte Schaltkreise 1 ist über eine drahtgebundene Nahbereichsschnittstelle 2 mit einem RFID-Frontend 3 gekoppelt. Das RFID-Frontend 3 weist eine RFID-Antenne 4 auf, die mit einer externen RFID-Einrichtung 5 kommunizieren, d.h. Daten von dort empfangen oder Daten zu der externen RFID-Einrichtung senden kann. Die gesamte Anordnung aus dem RFID-Frontend mit RFID-Antenne, der drahtgebundenen Nahbereichsschnittstelle und dem programmierbaren integrierten Schaltkreis ist auf einem Träger 6 angeordnet. Dieser gesamte Aufbau lässt sich somit wie ein RFID-Tag handhaben und von der externen RFID-Einrichtung beeinflussen.

Die drahtgebundene Nahbereichsschnittstelle ist als eine Masterschnittstelle ausgebildet. Das bedeutet, dass diese insbesondere Daten anforderungslos von dem RFID-Frontend 3 zu dem programmierbaren integrierten Schaltkreis 1 weitergibt. Letztlich ermöglicht dies ein Aufschreiben von Software und/oder Firmware von der externen RFID-Einrichtung über das RFID-Frontend 3 zu dem programmierbaren integrierten Schaltkreis 1. Nach außen hin wirkt die gesamte Anordnung wie ein RFID-Tag.

Die drahtgebundene Nahbereichsschnittstelle ist in Hardwarestrukturen innerhalb des RFID-Frontends 3 und/oder in Hardwarestrukturen des programmierbaren integrierten Schaltkreises 1 implementiert.

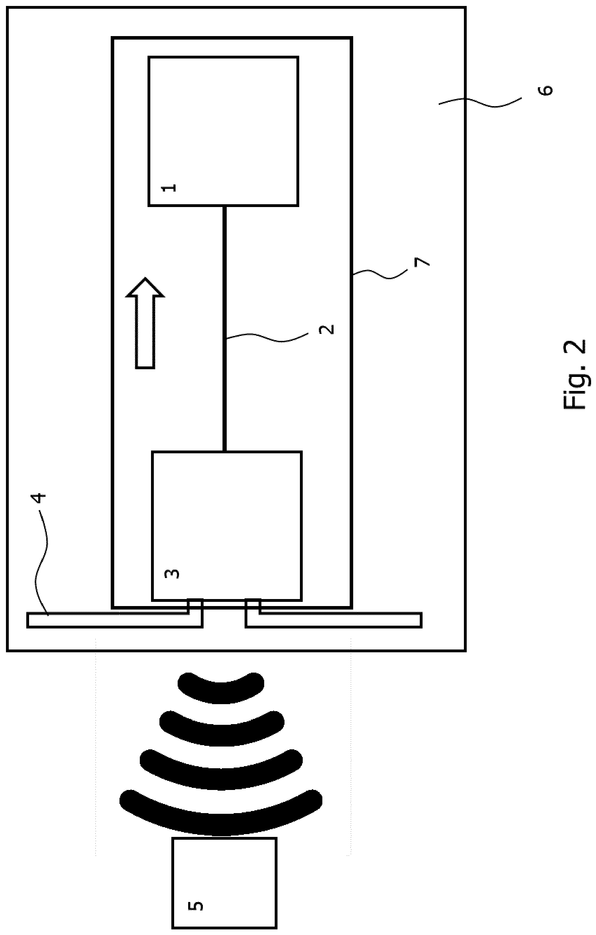

Bei der Anordnung gemäß Fig. 2 ist grundsätzlich der gleiche Aufbau realisiert. Bei dem hier gezeigten Ausführungsbeispiel ist jedoch das RFID-Frontend 3 zusammen mit dem programmierbaren integrierten Schaltkreis 1 und der drahtgebundenen Nahbereichsschnittstelle 2 in einem gemeinsamen integrierten elektronischen Bauelement 7, d.h. insbesondere innerhalb eines gemeinsamen Chips, vereinigt. Die auf dem Träger 6 vorhandene Anordnung zeigt in der äußerlichen Erscheinungsform dann praktisch nur die RFID-Antenneneinrichtung 4 und das gemeinsame integrierte elektronische Bauelement 7, d.h. den gemeinsamen Chip und mutet so wie ein herkömmlicher RFID-Tag an. Dieser RFID-Tag ist jedoch programmierbar.

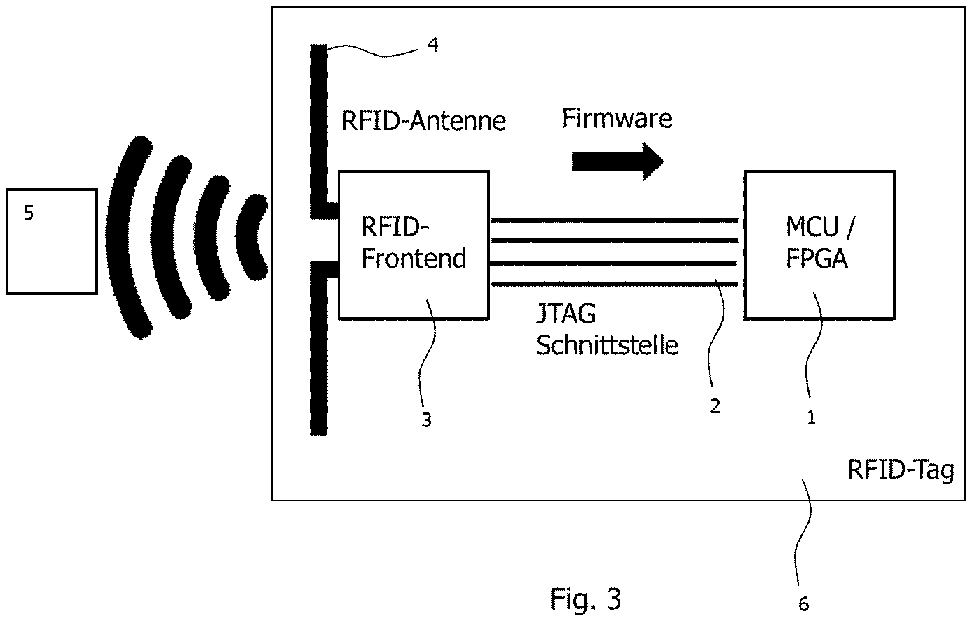

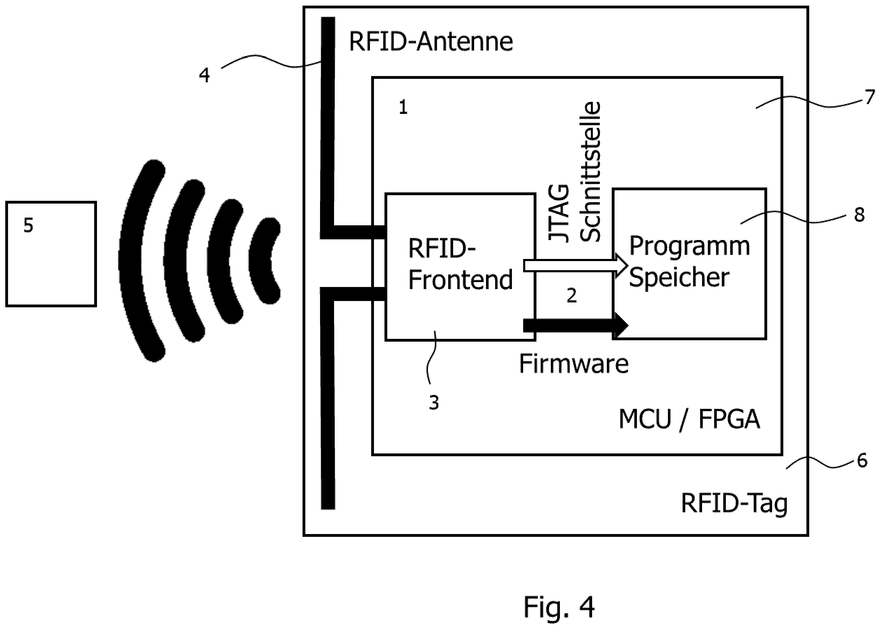

Die Figuren 3 und 4 zeigen beispielhafte Realisierungen einer Anordnung unter Verwendung einer JTAG-Schnittstelle als drahtgebundene Nahbereichsschnittstelle 2, des RFID-Frontends 3 und einen MCU und/oder eine FPGA als programmierbarer integrierter Schaltkreis 1. In der Ausführungsform gemäß Fig. 4 sind das RFID-Frontend 3, ein Programmspeicher 8 und die JTAG-Schnittstelle als Nahbereichsschnittstelle 2 innerhalb des MCU bzw. FPGA als dem programmierbaren integrierten Schaltkreis 1 vereinigt. Dieser bildet somit in diesem Beispiel das gemeinsame integrierte elektronische Bauelement 7.

Zusammengefasst kann somit das RFID-Frontend 3 als eigener auf einer Leiterplatte oder ähnlichem Substrat aufgebrachter IC ausgeführt sein, oder alternativ auf dem gemeinsamen integrierten elektronischen Bauelement 7 integriert sein. Als Nahbereichsschnittstelle zwischen dem RFID-Frontend und dem programmierbaren integrierten Schaltkreis 1 können verschiedene drahtgebundene Nahbereichs-Schnittstellen wie z.B. JTAG, Spy-Bi-Wire, UART, SPI, I2C verwendet werden.

Die Anordnungen gemäß den Ausführungsbeispielen in den Figuren 1 bis 4 ermöglichen es, das Flashen insbesondere von programmierbaren MCU bzw. FPGA drahtlos und kontaktlos unter Verwendung von RFID Technologie (in Anlehnung und Erweiterung an eine Funktionalität nach ISO 18000-6C) auszuführen. Als Flashingeinheit dient die externe RFID-Einrichtung 5. Die Kopplung zwischen der Flashing-Einheit und dem MCU oder dem FPGA-Baustein erfolgt dabei über eine Luftschnittstelle zwischen zwei Antennen. Eine erste Antenne ist dabei Bestandteil der RFID Technik der externen Flashing-Einheit, eine zweite Antenne ist als die erwähnte RFID-Antenneneinrichtung 4 mit dem MCU-Chip oder dem FPGA-Element gekoppelt.

Das entweder separate oder in den MCU bzw. den FPGA integrierte RFID-Frontend ermöglicht einen Datenaustausch, d.h. eine Kommunikation zwischen dem MCU-Chip bzw. dem FPGA-Element und dem RFID-Reader der externen Flashing-Einheit.

Das RFID-Frontend ist entweder ein integraler Bestandteil des MCU-Chips oder des FPGA. Eine derartige Konfiguration ist neben in Fig. 2 auch in Fig. 4 dargestellt. Das RFID-Frontend kann aber auch dem MCU-Chip bzw. dem FPGA als eine zusätzliche Hardware-Komponente auf einem gemeinsamen Substrat zugeordnet sein, wie in Fig. 3 oder auch in Fig. 1 gezeigt. Der MCU bzw. der FPGA verfügt somit über ein RFID-Frontend oder ist mit einer RFID-tauglichen Komponente verbunden, die die Daten zum MCU bzw. dem FPGA übergibt.

Das RFID-Frontend und der MCU-Chip bzw. der FPGA kommunizieren über eine entsprechende Schnittstelle miteinander. Insbesondere kommt hier eine sogenannte JTAG-Schnittstelle zur Anwendung.

Bezüglich externen Vorrichtungen, d.h. insbesondere in Bezug auf die externe Flashing-Einheit, fungiert die Gesamtheit aus MCU-Chip oder FPGA und RFID-Frontend, einschließlich der RFID-Antenne, wie ein herkömmlicher RFID-Tag. Das heißt insbesondere, dass dieser auf RFID-Readerbefehle reagiert und darüber interagiert.

Der MCU-Chip, der FPGA, beziehungsweise der MCU-Chip, der FPGA und dessen RFID-Frontend sind hierzu an eine geeignete RFID-Tag-Antenne angekoppelt und auf diese abgestimmt. Die Abstimmung betrifft insbesondere die Empfindlichkeit und Leistungsaufnahme der RFID-Tag-Antenne.

Bei dem erfindungsgemäßen Verfahren zum Flashen des MCU-Chips bzw. des FPGA wird die zu programmierende Software, d.h. insbesondere die zu programmierende Firmware, über einen RFID-Schreibbefehl und/oder einen vergleichbaren Steuerbefehl mittels des RFID-Readers der externen Flashing-Einheit drahtlos an den RFID-Tag inklusive des darin enthaltenen MCU-Chips oder des FPGA übertragen.

Das Aufschreiben der Firmware auf den MCU-Chip oder den FPGA erfolgt dann in der an sich üblichen Weise. Die über die RFID übertragene Firmware wird in den dafür vorgesehenen Programmspeicher des MCU-Chips oder die entsprechenden Strukturen des FPGA geschrieben.

Dies kann auch so ausgeführt werden, dass hierzu ein spezieller eigener RFID-Befehl benötigt wird, sodass die Daten zunächst in einen speziellen Speicherbereich des RFID-Tags geschrieben und erst danach in den Programmspeicher des MCU-Chips oder die Schaltungsstrukturen des FPGA verschoben werden.

Das beschriebene Verfahren kann in verschiedenen Fertigungsprozessen angewendet werden.

Zur elektrischen Stromversorgung des programmierbaren integrierten Schaltkreises 1, d.h. der MCU bzw. des FPGA können unterschiedliche Ausführungsformen dienen.

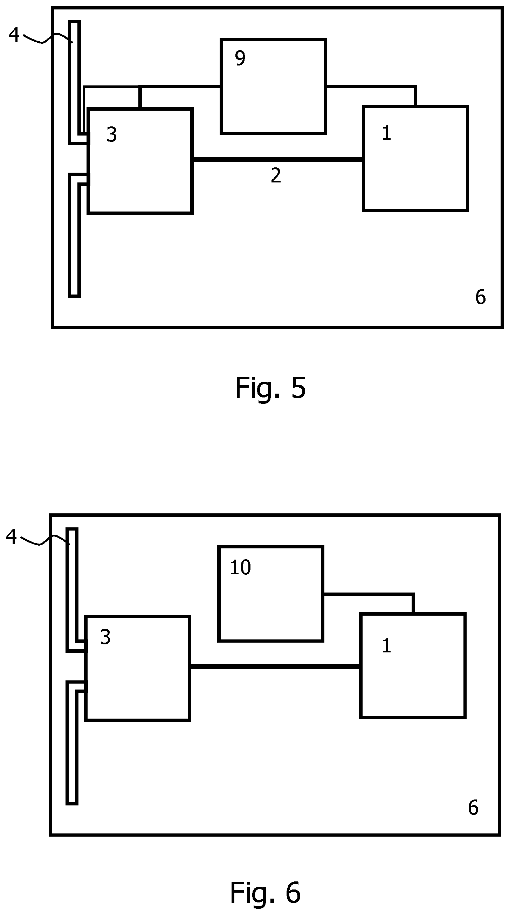

Fig. 5 zeigt eine Ausführungsform, bei der das RFID-Frontend 3 dem zu programmierenden integrierten Schaltkreis 1 eine Stromversorgung während des Programmiervorgangs bereitstellt. Dabei wird dem elektromagnetischen Lesefeld des RFID-Lese-/Schreibgerätes Energie entnommen, welche während des Programmiervorgangs dazu verwendet wird, den programmierbaren Schaltkreis 1 mit ausreichend Strom zu versorgen. Eine derartige Stromversorgung besteht demnach aus einer mit der RFID-Antenneneinrichtung 4 verbundenen schnellen Gleichrichterschaltung 9, die nach Gleichrichtung und anschließender Glättung und Filterung der pulsierenden Gleichspannung zusätzlich eine Regelung der erzeugten schwankenden Gleichspannung auf feste Spannungswerte ausführt. Die schnelle Gleichrichterschaltung 9 kann natürlich auch mit dem RFID-Frontend 3 verbunden sein.

Alternativ zu einer derartigen, aus dem elektromagnetischen Wechselfeld erfolgenden Stromversorgung kann auch gemäß Fig. 6 eine Batterie oder Akkumulator 10 eingesetzt werden.

Das mit derartigen RFID-Tags mögliche Programmierverfahren kann zur drahtlosen Programmierung von MCU-Chips oder FPGA während des Produktionsprozess von mit MCU-Chips oder FPGA ausgestatteten RFID-Tags angewendet werden. Hierdurch kann eine unter Produktionsbedingungen schwierige und für den RFID-Tag letztlich auch völlig nachteilige elektrische Kontaktierung vermieden werden.

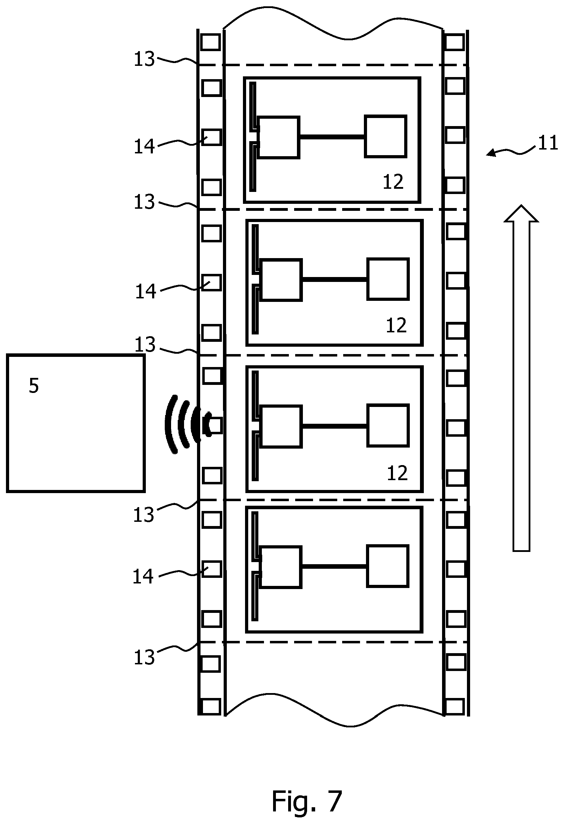

Fig. 7 eine beispielhafte Endlosbahn mit einer Vielzahl von einzelnen RFID-Schaltungen. Eine derartige Konfiguration kann bei einem Rolle-zu-Rolle-Fertigungsverfahren angewendet werden.

Fig. 7 zeigt eine Endlosbahn 11, die eine Vielzahl von RFID-Transpondereinheiten 12 enthält. Jede dieser Transpondereinheiten 12 beinhaltet die zuvor erläuterte Anordnung aus dem programmierbaren integrierten Schaltkreis 1, der drahtgebundenen Nahbereichsschnittstelle 2, dem RFID-Frontend 3 mit der RFID-Antenneneinrichtung 4. Die Endlosbahn 11 wird in einem späteren Prozessschritt zu einzelnen RFID-Tags vereinzelt. Zusammen mit den Transpondereinheiten 12 bildet die Endlosbahn somit eine Transponderbahn aus.

Bei der Kombination des erfindungsgemäßen Flash-Verfahrens mit der Rolle-zu-Rolle-Fertigung wird die Transponderbahn als ein Endlosband während der Produktion ständig bewegt oder getaktet vorbeigeführt. Dabei werden an einer Produktionsstation die RFID-Elemente und integrierten Schaltkreise der Transpondereinheiten 12 auf das entsprechende Substrat aufgedruckt, während an einer weiteren Produktionsstation der integrierte programmierbare Schaltkreis, d.h. insbesondere der MCU-Chip oder der FPGA zusammen mit dem entweder im MCU-Chip oder dem FPGA integrierten oder zusätzlichen RFID-Frontend auf das Substrat abgesetzt und mit der gedruckten RFID-Antenne kontaktiert werden. Natürlich können hier weitere Produktionsstationen vorgesehen sein, etwa eine Bedeckung mit einer Klebeschicht, einer Deckschicht und dergleichen Fertigungsschritte mehr.

Die gesamte Endlosbahn 11 wird kontinuierlich weiterbewegt, wobei die fertigen RFID-Elemente schließlich der externen RFID-Einrichtung 5 als Flashing-Einheit zugeführt werden, die dann an jedem einzelnen RFID-Element das Aufschreiben der Firmware auf den MCU-Chip oder den FPGA über den draht- und kontaktlosen Datenaustausch ausführt. Danach oder auch vor dem Aufschreiben der Firmware erfolgt dann das Vereinzeln der RFID-Elemente entlang dafür vorgesehener Trennlinien 13 auf der Endlosbahn. Diese Trennlinien können als Solltrennlinien vorgesehen sein, etwa in Form von eingestanzten Perforationslinien oder Sollbruchlinien. Sie können aber auch die gedachte und in einem Fertigungssystem vorab gespeicherte Linie bezeichnen, entlang der die einzelnen Elemente definiert abgeschnitten und vereinzelt werden.

Es versteht sich, dass statt der vorher genannten Firmware auch sonstige Software aller Art entsprechend auf dem MCU-Chip bzw. den FPGA aufgespielt werden kann. Die betrifft insbesondere die Programmierung des MCU bzw. des FPGA mit Steuerungssoftware oder vergleichbarem implementierbaren Code

Es wird somit eine RFID Luftschnittstelle geschaffen, die unter Umständen direkt in der Bauteilfertigung programmierbar ist. Es wird somit kein herkömmliches Beschreiben oder Auswerten eines RFID-Chips ausgeführt, sondern es erfolgt die Nutzung einer RFID-Schnittstelle (RFID-Frontend) zur Kommunikation mit einer MCU bzw. einem FPGA.

Konkret erfolgt dies beispielsweise so, dass der MCU bzw. der FPGA mit integriertem oder separatem RFID-Frontend auf der Endlosbahn 11 sitzt, die als Inlaybahn ausgestaltet ist. Die Inlaybahn wird in einem Rolle-zu-Rolle-Prozess durch Hinzufügen von diversen Abdeckungen oder ggf. auch Zwischenschichten zur Transponderbahn verarbeitet. Die Inlaybahn besteht aus einem Endlosmaterial (z.B. PET Folie, PI Folie oder sonstige geeignete Substrate) auf Rolle, auf welcher aneinandergereihte, einzelne leitfähige Strukturen, üblicherweise des gleichen Layouts aufgebracht (z.B. gedruckt, geätzt, gefräst) sind.

Diese layoutgleichen Strukturen bestehen aus mindestens einer RFID-Antenne, mindestens einer MCU bzw. FPGA und ggf. noch weiteren Bauteilen, wie Sensoren, Batterien oder diversen elektronischen Komponenten. Der Fertigungsprozess findet bei konstanter Vorschubgeschwindigkeit oder mit kurzen Taktzeiten statt. Damit ist eine herkömmliche elektrische Kontaktierung für eine Programmierung nicht oder nur umständlich möglich.

Eine drahtlose Programmierung über die RFID-Schnittstelle kann jedoch auch während einer bewegten Transponderbahn stattfinden. Die Bahn wird dabei definiert und reproduzierbar an einer Reader-Antenne vorbeigeführt. Der Reader wird dabei beispielsweise per Lichtschrankensteuerung getriggert. Hierzu kann die Endlosbahn 11 ergänzend eine Reihe von Löchern 14 aufweisen, die einerseits den Transport der Endlosbahn im funktionellen Zusammenhang mit Führ- und Fördereinrichtungen unterstützen, aber andererseits auch von der Lichtschrankensteuerung als Lochblenden und somit als Positionsmarkierungen registriert werden. Die RFID-Transpondereinheiten 12 können dann in der optimalen Position bezüglich der externen RFID-Einrichtung 5 und somit der RFID-Flasheinheit erkannt werden, sodass der Flashvorgang selbst problemlos ablaufen kann.

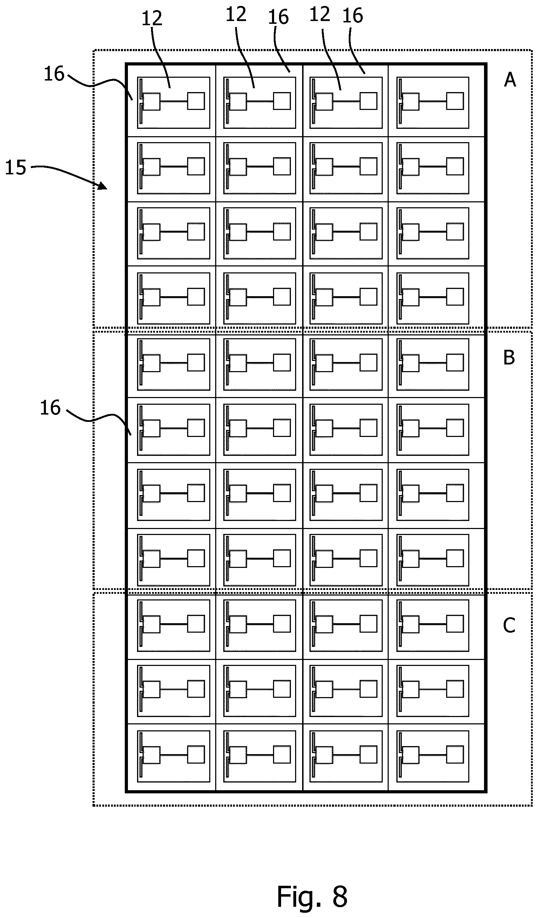

Fig. 8 zeigt eine beispielhafte Anordnung eines Pulks aus RFID-Schaltungen mit individueller Adressierbarkeit. Eine solche Konfiguration ist vorteilhaft, um eine drahtlose Programmierung in einem so genannten Pulk zu ermöglichen. Bei der Pulk-Programmierung werden gleichzeitig mehrere RFID-Transpondereinheiten 12, d.h. mehrere darin enthaltene programmierbare integrierte Schaltkreise drahtlos über den RFID-Zugriff programmiert. Vorteilhaft ist hier die Etablierung eines besonderen Schreibbefehls, der bewirkt, dass das Schreiben auf allen RFID-Transpondereinheiten innerhalb des Pulks gleichzeitig erfolgt.

Eine Vielzahl von MCU bzw. der FPGA mit integriertem oder separatem RFID-Frontend, d.h. eine Vielzahl von RFID-Transpondereinheiten 12 dabei beispielsweise auf einem starren oder flexiblen Leiterplattennutzen 15. Der Leiterplattennutzen 15 besteht aus mehreren identischen oder auch verschiedenen Einzelleiterplatten 16. Gegebenenfalls sind den Einzelleiterplatten 16 außerdem einseitig oder beidseitig Abdeckungen (z.B. zu sog. RFID-Label oder RFID-Tags verarbeitet) hinzugefügt. Unter "Abdeckung" kann auch die Montage in einem Gehäuse (z.B. sog. RFID Hard-Tag) gemeint sein.

Die Programmierung erfolgt dabei zweckmäßigerweise deswegen im Nutzen als Pulk-Programmierung, um nicht die RFID-Transpondereinheiten 12 auf jeder Einzelleiterplatte 16 separat ansprechen und programmieren zu müssen. Dadurch erreicht man eine enorme Aufwandseinsparung. Im Gegensatz zu dem vorhergehenden Ausführungsbeispiel wo jeder Transponder auf der Endlosbahn einzeln programmiert wird, wird in der Pulk-Programmierung adressiert programmiert. Das bedeutet, dass der vorher erwähnte Schreibbefehl zunächst bei den RFID-Transpondereinheiten das gleichzeitige Schreiben aktiviert, während jedoch die Adressierung nur einzelne oder eine Teilmenge aus RFID-Transpondereinheiten anspricht, sodass hier einzelne Daten selektiv übermittelt werden.

Nach einem ersten Startscan, bei Start der Nutzenerkennung, wird die Anzahl der erkannten Einzelleiterplatten sowie deren Adressen/TIDs erfasst und anschließend sequentiell abgearbeitet. Bei der Pulk-Programmierung erfolgt dies so, dass beispielsweise zuerst ein Abschnitt A als Ganzes einem externen RFID-Feld zur Programmierung ausgesetzt wird, anschließend dann ein Abschnitt B bzw. ein Abschnitt C des Leiterplattennutzens 15. Möglich ist auch ein gleichzeitiges Abarbeiten aller drei Abschnitte bei großen externen RFID-Feldern, wobei hier die Adressierung zur Anwendung kommen kann.

Es ist ebenso möglich, dass die einzelnen programmierbaren integrierten Schaltkreise bereits einzeln individuell adressierbar gestaltet sind, d.h. im Rahmen einer bestimmten Hardwarekonfiguration oder einer vorhergehenden Programmierung. Bei der Pulk-Programmierung werden dann einzelne programmierende Sequenzen gesendet, wobei jede einzelne Sequenz auf die bestimmte individuelle Adressierbarkeit der einzelnen programmierbaren Schaltkreise abgestimmt ist. Das Leiterplattennutzen 15 wird somit als Ganzes von dem RFID-Feld beaufschlagt, die einzelnen Sequenzen sprechen jedoch nur bestimmte adressierte RFID-Transpondereinheiten bzw. deren einzelne integrierte Schaltkreise an und die Programmierung erfolgt somit zwar im Pulk, gegebenenfalls gleichzeitig aber letztlich individuell verschieden.

Möglich ist auch eine Einzelprogrammierung nach der Produktion. Der MCU oder der FPGA mit separatem oder integriertem RFID-Frontend sitzt auf einer starren oder flexiblen Leiterplatte. Gegebenenfalls sind der Leiterplatte noch einseitig oder beidseitig Abdeckungen (z.B. zu sog. RFID-Label oder RFID-Tags verarbeitet) hinzugefügt, wobei mit Abdeckung auch die Montage in einem Gehäuse (z.B. sog. RFID Hard-Tag) gemeint sein kann. Zum Zeitpunkt der Produktion der RFID Label / RFID Hard-Tags muss deren späterer Einsatz noch nicht festgelegt sein. Es werden sozusagen zunächst Universaltransponder gefertigt. Da eine nachträgliche drahtgebundene Programmierung nicht möglich oder nicht vorteilhaft ist, wird eine Programmierung über die RFID-Schnittstelle vollzogen. Dies kann im Rahmen einer Warenausgangskontrolle stattfinden. Der zu prüfende Transponder wird auf den Prüfplatz aufgelegt, programmiert, vermessen (Kontrolle der RFID-Performance) und geprüft (Auslesen der Messdaten o.Ä.).

Möglich ist auch eine Einzelprogrammierung mittels eines Firmwareupdates nach Auslieferung im Rahmen einer Wartung, eines Firmwareupdates oder dergleichen Aktionen vor Ort. Der MCU bzw. der FPGA mit separatem oder integriertem RFID-Frontend sitzt auf einer starren oder flexiblen Leiterplatte. Gegebenenfalls sind der Leiterplatte noch einseitig oder beidseitig Abdeckungen (z.B. sog. RFID-Label) hinzugefügt, wobei mit Abdeckung auch die Montage in einem Gehäuse (z.B. sog. RFID Hard-Tag) gemeint sein kann.

Die programmierte Firmware ist dabei beispielsweise zum Zeitpunkt der Produktion der RFID-Transponder aktuell und die RFID-Transponder sind bereits an den Kunden ausgeliefert. Die Firmware hat sich jedoch im Laufe der Zeit verbessert bzw. weiterentwickelt. Da ein nachträgliches drahtgebundenes Firmwareupdate nicht möglich ist, kann nun eine Programmierung über die RFID-Schnittstelle vollzogen werden. Dies kann direkt beim Kunden stattfinden. Der zu updatende RFID-Transponder wird mittels eines speziellen RFID-Programmiergerätes beschrieben und geprüft. Hierzu wird ein Auslesen der Messdaten oder ein ähnlicher Überprüfungsvorgang ausgeführt.

Die Gegenstände der Erfindung wurden beispielhaft erläutert. Im Rahmen fachmännischen Handelns sind weitere Ausgestaltungen möglich. Weitere Ausführungsformen ergeben sich außerdem aus den Unteransprüchen.

### Bezugszeichenliste

- 1: programmierbarer integrierter Schaltkreis
- 2: drahtgebundene Nahbereichsschnittstelle
- 3: RFID-Frontend
- 4: RFID-Antenne
- 5: Externe RFID-Einrichtung
- 6: Träger
- 7: Integriertes elektronisches Bauelement
- 8: Programmspeicher
- 9: Schnelle Gleichrichterschaltung
- 10: Batterie oder Akkumulator
- 11: Endlosbahn
- 12: Transpondereinheit
- 13: Trennlinie
- 14: Loch
- 15: Leiterplattennutzen
- 16: Einzelleiterplatte
- A, B, C: Abschnitte des Leiterplattennutzens

## Patentansprüche

1. Verfahren zum Aufschreiben von Software und/oder Firmware auf mindestens einen programmierbaren integrierten Schaltkreis (1), **dadurch gekennzeichnet, dass**
das Aufschreiben der Software und/oder Firmware als ein Flashen eines programmierbaren MCU und/oder eines FPGA drahtlos und kontaktlos mittels einer RFID-Datenübertragung erfolgt,
wobei mindestens ein programmierbarer integrierter Schaltkreis (1), eine drahtgebundene Nahbereichsschnittstelle (2) zum Aufschreiben von Software und/oder Firmware auf den programmierbaren integrierten Schaltkreis (1), ein RFID-Frontend (3) und eine Antenneneinrichtung (4) als Gesamtanordnung auf einem gemeinsamen Träger (6) angeordnet sind, wobei die drahtgebundene Nahbereichsschnittstelle in Hardwarestrukturen innerhalb des RFID-Frontends (3) und/oder in Hardwarestrukturen des programmierbaren integrierten Schaltkreises (1) implementiert ist und die drahtgebundene Nahbereichsschnittstelle (2) eine Masterfunktionalität aufweist, bei der ein aktives und anforderungsloses Senden von Daten an den programmierbaren integrierten Schaltkreis (1) ausführbar ist,
wobei der mindestens eine programmierbare integrierte Schaltkreis (1) über die drahtgebundene Nahbereichs-Schnittstelle (2) mit dem RFID-Frontend (3) gekoppelt wird,
wobei das RFID-Frontend (3) die RFID-Antenneneinrichtung (4) aufweist, und wobei die aufzuschreibende Software und/oder Firmware von einer externen RFID-Einheit (5) drahtlos an die RFID-Antenneneinrichtung (4) gesendet und über das RFID-Frontend (3) und die Nahbereichsschnittstelle (2) auf den programmierbaren integrierten Schaltkreis (1) aufgeschrieben wird.

2. Verfahren nach einem der vorhergehenden Ansprüche,
**dadurch gekennzeichnet, dass**
die Gesamtanordnung aus dem RFID-Frontend (3), der Nahbereichsschnittstelle (2) und dem programmierbaren integrierten Schaltkreis (1) als ein passiver RFID-Tag betrieben wird, wobei die aufzuschreibende Software und/oder Firmware mittels eines RFID-Schreibbefehls und/oder eines vergleichbaren Befehls auf den programmierbaren integrierten Schaltkreis (1) übertragen wird.

3. Verfahren nach einem der vorhergehenden Ansprüche,
**dadurch gekennzeichnet, dass**
über das RFID-Frontend (3) mindestens während des Aufschreibvorgangs der Software und/oder der Firmware eine elektrische Stromversorgung für programmierbaren integrierten Schaltkreis (1) erfolgt.

4. Verfahren nach Anspruch 3,
**dadurch gekennzeichnet, dass**
die Energie für die bereitgestellte elektrische Stromversorgung durch ein Umformen der Feldenergie einer externen RFID-Quelle entnommen wird.

5. Verfahren nach Anspruch 4,
**dadurch gekennzeichnet, dass**
die von der RFID-Antenneneinrichtung (4) empfangene Feldenergie über eine schnelle Gleichrichterschaltung (9) mit einer Glättung und Filterung sowie einer Spannungsregelung in elektrische Energie für den programmierbaren integrierten Schaltkreis (1) umgesetzt wird.

6. Verfahren nach einem der Ansprüche 1 oder 2,
**dadurch gekennzeichnet, dass**
der programmierbare integrierte Schaltkreis (1) über eine Batterie- und/oder eine Akkumulatoreinheit (10) mit elektrischem Strom versorgt wird.

7. Verfahren nach einem der vorhergehenden Ansprüche,
**dadurch gekennzeichnet, dass**
der programmierbare integrierte Schaltkreis (1), das über die drahtgebundene Nachbereichs-Schnittstelle (2) gekoppelte RFID-Frontend (3) und die in dem RFID-Frontend enthaltene RFID-Antenneneinrichtung (4) jeweils als eine Vielzahl von auf einer Endlosbahn angeordnete RFID-Transpondereinheiten ausgebildet sind, wobei die Endlosbahn an einer externen RFID-Schreibeinrichtung zum Aufschreiben der Software und/oder Firmware auf den programmierbaren integrierten Schaltkreis vorbeigeführt wird.

8. Verfahren nach einem der vorhergehenden Ansprüche,
**dadurch gekennzeichnet, dass**
der programmierbare integrierte Schaltkreis (1), das über die drahtgebundene Nachbereichs-Schnittstelle (2) gekoppelte RFID-Frontend (3) und die in dem RFID-Frontend enthaltene RFID-Antenneneinrichtung (4) jeweils als eine Vielzahl von einzelnen oder auf einem gemeinsamen Träger angeordneten RFID-Transpondereinheiten ausgebildet sind, wobei die Vielzahl der RFID-Transpondereinheiten als ein Pulk gemeinsam in den Bereich der externen RFID-Schreibeinrichtung gebracht und programmiert wird.

9. Verfahren nach Anspruch 8,
**dadurch gekennzeichnet, dass**
ein Pulk-Schreibbefehl vorgesehen ist, durch den bewirkt wird, dass alle sich im Feld der externen RFID-Schreibeinrichtung befindlichen RFID-Transpondereinheiten des Pulks gleichzeitig beschrieben und programmiert werden.

10. Verfahren nach einem der vorhergehenden Ansprüche,
**dadurch gekennzeichnet, dass**
der programmierbare integrierte Schaltkreis (1) ein MCU-Chip oder ein FPGA-Chip ist.

11. Anordnung zum drahtlosen Aufschreiben von Software und/oder Firmware auf mindestens einen programmierbaren integrierten Schaltkreis in Form eines programmierbaren MCU und/oder eines FPGA,
bestehend aus mindestens einer als Gesamtanordnung auf einem gemeinsamen Träger (6) angeordneten, von einer externen RFID-Einheit ansprechbaren RFID-Schaltung, enthaltend den mindestens einen programmierbaren integrierten Schaltkreis (1), ein RFID-Frontend (3) mit einer RFID-Antenne (4) und einer das RFID-Frontend mit dem programmierbaren integrierten Schaltkreis koppelnden drahtgebundenen Nahbereichsschnittstelle (2),
**dadurch gekennzeichnet, dass**
die drahtgebundene Nahbereichsschnittstelle in Hardwarestrukturen innerhalb des RFID-Frontends (3) und/oder in Hardwarestrukturen des programmierbaren integrierten Schaltkreises (1) implementiert ist und die drahtgebundene Nahbereichsschnittstelle (2) eine Masterfunktionalität aufweist, bei der ein aktives und anforderungsloses Senden von Daten an den programmierbaren integrierten Schaltkreis (1) ausführbar ist, wobei der mindestens eine programmierbare integrierte Schaltkreis (1) über die drahtgebundene Nahbereichs-Schnittstelle (2) mit dem RFID-Frontend (3) gekoppelt wird,
wobei das RFID-Frontend (3) die RFID-Antenneneinrichtung (4) aufweist, und wobei die aufzuschreibende Software und/oder Firmware von einer externen RFID-Einheit (5) drahtlos an die RFID-Antenneneinrichtung (4) übertragbar und über das RFID-Frontend (3) und die Nahbereichsschnittstelle (2) auf den programmierbaren integrierten Schaltkreis (1) aufschreibbar ist.

12. Anordnung nach Anspruch 11,
**dadurch gekennzeichnet, dass**
das RFID-Frontend (3), die drahtgebundene Nahbereichsschnittstelle (2) und der programmierbare integrierte Schaltkreis (1) in einem gemeinsamen integrierten elektronischen Bauelement (7) vereinigt sind.

13. Anordnung nach einem der Ansprüche 10 oder 11,
**dadurch gekennzeichnet, dass**
der Träger (6) als eine Endlosbahn ausgebildet ist, wobei die Endlosbahn eine Vielzahl von RFID-Schaltungen aufweist und die Endlosbahn an einer externen RFID-Programmiereinrichtung vorbeibewegbar und dabei jede RFID-Schaltung nacheinander ansprechbar ist.

14. Anordnung nach einem der Ansprüche 11 oder 12,
**dadurch gekennzeichnet, dass**
der Träger (6) eine Vielzahl von RFID-Schaltungen (12) aufweist, wobei die auf dem Träger angeordneten RFID-Schaltungen (12) von einer externen RFID-Einrichtung (5) einzeln adressierbar ansprechbar sind.

15. Anordnung nach einem der Ansprüche 11 oder 12,
**dadurch gekennzeichnet, dass**
der Träger (6) als ein Einzelnutzen mit nur einer RFID-Schaltung (12) ausgebildet ist, wobei die auf dem Träger angeordnete RFID-Schaltung (12) von einem mobilen RFID-Programmiergerät ansprechbar ist oder von einer externen RFID-Einrichtung adressierbar ansprechbar ist.

## Claims

1. Method for writing software and/or firmware to at least one programmable integrated circuit (1),
**characterized in that**
the writing of the software and/or firmware is performed as a flashing of a programmable MCU and/or an FPGA in a wireless and contactless manner by means of RFID data transmission,
wherein at least one programmable integrated circuit (1), a wired short-range interface (2) for writing software and/or firmware to the programmable integrated circuit (1), an RFID front end (3) and an antenna device (4) are arranged as a complete assembly on a common carrier (6),
wherein the wired short-range interface is implemented in hardware structures within the RFID front end (3) and/or in hardware structures of the programmable integrated circuit (1) and the wired short-range interface (2) has a master functionality, in which active and request-free transmission of data to the programmable integrated circuit (1) can be executed, wherein the at least one programmable integrated circuit (1) is coupled to the RFID front end (3) via the wired short-range interface (2),
wherein the RFID front end (3) comprises the RFID antenna device (4), and wherein the software and/or firmware to be written is sent wirelessly from an external RFID unit (5) to the RFID antenna device (4) and written to the programmable integrated circuit (1) via the RFID front end (3) and the short-range interface (2).

2. Method according to one of the preceding claims,
**characterized in that**
the overall assembly consisting of the RFID front end (3), the short-range interface (2) and the programmable integrated circuit (1) is operated as a passive RFID tag, wherein the software and/or firmware to be written is transferred to the programmable integrated circuit (1) by means of an RFID write command and/or a comparable command.

3. Method according to one of the preceding claims,
**characterized in that**
an electrical power supply for the programmable integrated circuit (1) is provided via the RFID front end (3) at least during the writing process of the software and/or firmware.

4. Method according to claim 3,
**characterized in that**
the energy for the electrical power supply provided is taken from the field energy of an external RFID source by conversion.

5. Method according to claim 4,
**characterized in that**
the field energy received by the RFID antenna device (4) is converted into electrical energy for the programmable integrated circuit (1) via a fast rectifier circuit (9) with smoothing and filtering as well as voltage regulation.

6. Method according to one of claims 1 or 2,
**characterized in that**
the programmable integrated circuit (1) is supplied with electrical current via a battery and/or an accumulator unit (10).

7. Method according to one of the preceding claims,
**characterized in that**
the programmable integrated circuit (1), the RFID front end (3) coupled via the wired short-range interface (2) and the RFID antenna device (4) contained in the RFID front end are each designed as a plurality of RFID transponder units arranged on an endless web, wherein the endless web is guided past an external RFID writing device for writing the software and/or firmware onto the programmable integrated circuit.

8. Method according to one of the preceding claims,
**characterized in that**
the programmable integrated circuit (1), the RFID front end (3) coupled via the wired post-range interface (2) and the RFID antenna device (4) contained in the RFID front end are each designed as a plurality of individual RFID transponder units or as a plurality of RFID transponder units arranged on a common carrier, wherein the plurality of RFID transponder units are brought together as a group into the area of the external RFID writing device and programmed.

9. Method according to claim 8,
**characterized in that**
a group write command is provided, which causes all RFID transponder units of the group located in the field of the external RFID writing device to be written and programmed simultaneously.

10. Method according to one of the preceding claims,
**characterized in that**
the programmable integrated circuit (1) is an MCU chip or an FPGA chip.

11. Assembly for wirelessly writing software and/or firmware to at least one programmable integrated circuit in the form of a programmable MCU and/or an FPGA, consisting of at least one RFID circuit arranged as a complete assembly on a common carrier (6) and addressable by an external RFID unit, containing the at least one programmable integrated circuit (1), an RFID front end (3) with an RFID antenna (4) and a wired short-range interface (2) coupling the RFID front end to the programmable integrated circuit,
**characterized in that**
that the wired short-range interface is implemented in hardware structures within the RFID front end (3) and/or in hardware structures of the programmable integrated circuit (1) and the wired short-range interface (2) has a master functionality, in which active and request-free transmission of data to the programmable integrated circuit (1) can be executed, wherein the at least one programmable integrated circuit (1) is coupled to the RFID front end (3) via the wired short-range interface (2),
wherein the RFID front end (3) comprises the RFID antenna device (4), and wherein the software and/or firmware to be written can be transmitted wirelessly from an external RFID unit (5) to the RFID antenna device (4) and written to the programmable integrated circuit (1) via the RFID front end (3) and the short-range interface (2).

12. Assembly according to claim 11,
**characterized in that**
the RFID front end (3), the wired short-range interface (2) and the programmable integrated circuit (1) are combined in a common integrated electronic component (7).

13. Assembly according to one of claims 10 or 11,
**characterized in that**
the carrier (6) is designed as an endless web, wherein the endless web has a plurality of RFID circuits and the endless web can be moved past an external RFID programming device and, in this way, each RFID circuit can be addressed in succession.

14. Assembly according to one of claims 11 or 12,
**characterized in that**
the carrier (6) has a plurality of RFID circuits (12), wherein the RFID circuits (12) arranged on the carrier are individually addressable and responsive to an external RFID device (5).

15. Assembly according to one of claims 11 or 12,
**characterized in that**
the carrier (6) is designed as a single-use device with only one RFID circuit (12), wherein the RFID circuit (12) arranged on the carrier can be addressed by a mobile RFID programming device or can be addressed in an addressable manner by an external RFID device.

## Revendications

1. Procédé d'écriture de logiciel et/ou de micrologiciel sur au moins un circuit intégré programmable (1),
**caractérisé en ce que** l'écriture du logiciel et/ou du micrologiciel s'effectue comme un flashage d'un MCU programmable et/ou d'un FPGA sans fil et sans contact au moyen d'une transmission de données RFID,
sachant que
au moins un circuit intégré programmable (1), une interface de proximité filaire (2) pour l'écriture de logiciel et/ou de micrologiciel sur le circuit intégré programmable (1), un frontal RFID (3) et un dispositif d'antenne (4) sont disposés en tant qu'agencement global sur un support commun (6),
l'interface de proximité filaire est mise en œuvre dans des structures matérielles à l'intérieur du frontal RFID (3) et/ou dans des structures matérielles du circuit intégré programmable (1), et l'interface de proximité filaire (2) présente une fonctionnalité maître permettant d'exécuter une transmission active, sans demande, de données au circuit intégré programmable (1),
ledit au moins un circuit intégré programmable (1) est couplé au frontal RFID (3) par l'intermédiaire de l'interface de proximité filaire (2),
le frontal RFID (3) comprend le dispositif d'antenne RFID (4), et
le logiciel et/ou le micrologiciel à écrire est transmis sans fil au dispositif d'antenne RFID (4) par une unité RFID externe (5) et est écrit sur le circuit intégré programmable (1) par l'intermédiaire du frontal RFID (3) et de l'interface de proximité (2).

2. Procédé selon la revendication précédente,
**caractérisé en ce que**
l'agencement global constitué par le frontal RFID (3), l'interface de proximité (2) et le circuit intégré programmable (1) est exploité comme une étiquette RFID passive, le logiciel et/ou le micrologiciel à écrire étant transmis au circuit intégré programmable (1) au moyen d'une instruction d'écriture RFID et/ou d'une instruction comparable.

3. Procédé selon l'une des revendications précédentes,
**caractérisé en ce que**
une alimentation électrique du circuit intégré programmable (1) est effectuée via le frontal RFID (3) au moins pendant l'opération d'écriture du logiciel et/ou du micrologiciel.

4. Procédé selon la revendication 3,
**caractérisé en ce que**
l'énergie pour l'alimentation électrique fournie est prélevée par une transformation de l'énergie de champ d'une source RFID externe.

5. Procédé selon la revendication 4,
**caractérisé en ce que**
l'énergie de champ reçue par le dispositif d'antenne RFID (4) est convertie en énergie électrique pour le circuit intégré programmable (1) par l'intermédiaire d'un circuit redresseur rapide (9) assurant un lissage et un filtrage ainsi qu'une régulation de tension.

6. Procédé selon l'une des revendications 1 ou 2,
**caractérisé en ce que**
le circuit intégré programmable (1) est alimenté en énergie électrique par une unité de batterie et/ou d'accumulateur (10).

7. Procédé selon l'une des revendications précédentes,
**caractérisé en ce que**
le circuit intégré programmable (1), le frontal RFID (3) couplé par l'intermédiaire de l'interface de proximité filaire (2) et le dispositif d'antenne RFID (4) contenu dans le frontal RFID sont chacun conçus comme une pluralité d'unités de transpondeur RFID disposées sur une piste sans fin, la piste sans fin passant devant un dispositif d'écriture RFID externe pour écrire le logiciel et/ou le micrologiciel sur le circuit intégré programmable.

8. Procédé selon l'une des revendications précédentes,
**caractérisé en ce que**
le circuit intégré programmable (1), le frontal RFID (3) couplé par l'intermédiaire de l'interface de proximité filaire (2) et le dispositif d'antenne RFID (4) contenu dans le frontal RFID sont chacun conçus comme une pluralité d'unités de transpondeur RFID individuelles ou disposées sur un support commun, la pluralité d'unités de transpondeur RFID étant amenée ensemble, en formant un groupage, vers la zone du dispositif d'écriture RFID externe et étant programmée.

9. Procédé selon la revendication 8,
**caractérisé en ce que**
il est prévu une instruction d'écriture par groupage qui fait que toutes les unités de transpondeur RFID du groupage se trouvant dans le champ du dispositif d'écriture RFID externe soient munies de l'écriture et programmées simultanément.

10. Procédé selon l'une des revendications précédentes,
**caractérisé en ce que**
le circuit intégré programmable (1) est une puce MCU ou une puce FPGA.

11. Dispositif pour l'écriture sans fil de logiciels et/ou de micrologiciels sur au moins un circuit intégré programmable sous la forme d'un MCU et/ou d'un FPGA programmable,
constitué par au moins un circuit RFID disposé sous forme d'agencement global sur un support commun (6) et pouvant être adressé par une unité RFID externe, contenant ledit au moins un circuit intégré programmable (1), un frontal RFID (3) avec une antenne RFID (4) et une interface de proximité filaire (2) couplant le frontal RFID au circuit intégré programmable,
**caractérisé en ce que**
l'interface de proximité filaire est mise en œuvre dans des structures matérielles à l'intérieur du frontal RFID (3) et/ou dans des structures matérielles du circuit intégré programmable (1), et l'interface de proximité filaire (2) présente une fonctionnalité maître permettant d'exécuter une transmission active, sans demande, de données au circuit intégré programmable (1),
sachant que
ledit au moins un circuit intégré programmable (1) est couplé au frontal RFID (3) par l'intermédiaire de l'interface de proximité filaire (2),
le frontal RFID (3) comprend le dispositif d'antenne RFID (4), et
le logiciel et/ou le micrologiciel à écrire peut être transmis sans fil au dispositif d'antenne RFID (4) par une unité RFID externe (5) et peut être écrit sur le circuit intégré programmable (1) par l'intermédiaire du frontal RFID (3) et de l'interface de proximité (2).

12. Dispositif selon la revendication 11,
**caractérisé en ce que**
le frontal RFID (3), l'interface de proximité filaire (2) et le circuit intégré programmable (1) sont réunis dans un composant électronique intégré (7) commun.

13. Dispositif selon l'une des revendications 10 ou 11,
**caractérisé en ce que**
le support (6) est conçu comme une piste sans fin, la piste sans fin présentant une pluralité de circuits RFID et la piste sans fin pouvant passer devant un dispositif de programmation RFID externe et chaque circuit RFID pouvant être adressé successivement.

14. Dispositif selon l'une des revendications 11 ou 12,
**caractérisé en ce que**
le support (6) comprend une pluralité de circuits RFID (12), les circuits RFID (12) disposés sur le support pouvant être adressés individuellement par un dispositif RFID externe (5).

15. Dispositif selon l'une des revendications 11 ou 12,
**caractérisé en ce que**
le support (6) est réalisé sous la forme d'un flan unique avec un seul circuit RFID (12), le circuit RFID (12) disposé sur le support pouvant être adressé par un appareil de programmation RFID mobile ou pouvant être adressé par un dispositif RFID externe.
